# FASCICULE DE BREVET EUROPEEN

(11) **EP 3 140 113 B1**
(45) Date de publication et mention de la délivrance du brevet: **22.08.2018**
(21) Numéro de dépôt: 15725824.5
(22) Date de dépôt: 05.05.2015
(51) Int. Cl.: B32B 5/02, B32B 7/00, B32B 27/08, B29C 70/08

(54) **EMPILAGE DE COUCHES DE MATIERE PLASTIQUE RENCORCEE POUR MOULAGE DE PIECE**
STAPEL AUS SCHICHTEN AUS VERSTÄRKTEM KUNSTSTOFFMATERIAL FÜR FORMTEILE
STACK OF LAYERS MADE OF A REINFORCED PLASTIC MATERIAL FOR MOULDING PARTS

(30) Priorité: 09.05.2014 FR 1454186
(43) Date de publication de la demande: 15.03.2017
(73) Titulaire: Compagnie Plastic Omnium, 69007 Lyon (FR)
(72) Inventeur: ROCHEBLAVE, Laurent, 69100 Villeurbanne (FR)
(74) Mandataire: Remy, Vincent Noel Paul
(86) Numéro de dépôt international: PCT/FR2015/051192
(87) Numéro de publication internationale: WO 2015/170051

(56) Documents cités:
- EP-A1- 2 653 292
- EP-A1- 2 671 707
- WO-A1-2006/008529
- US-A- 5 025 278
- US-A1- 2005 287 891
- US-A1- 2006 121 805
- US-A1- 2006 222 837
- DATABASE WPI Week 199645 Thomson Scientific, London, GB; AN 1996-450445 XP002736157, & JP H08 224814 A (TORAY IND INC) 3 septembre 1996 (1996-09-03)

## Description

La présente invention concerne le domaine de la fabrication de pièces structurelles de véhicule automobile, et notamment la fabrication de telles pièces en matière plastique.

En particulier l'invention concerne un empilage de feuilles de matière plastique, ou composite multicouches, pour réaliser des pièces en matière plastique au moyen d'un procédé de moulage.

Les pièces de structure automobile sont des pièces dont la fonction est de maintenir la structure du véhicule, notamment en cas de choc. Il s'agit par exemple des poutres de choc avant et arrière du véhicule, du plancher, ou des pieds, avant, arrière et milieu du véhicule.

Une pièce structurelle de véhicule automobile doit donc posséder une grande résistance mécanique. C'est pourquoi, une telle pièce est généralement réalisée en acier et plus rarement en aluminium.

Cependant, les constructeurs automobiles sont de plus en plus contraints de réduire le poids du véhicule. Or, les pièces de structure réalisées en acier sont relativement lourdes de par le matériau utilisé.

Pour limiter le poids de ces pièces, tout en conservant leur propriété première de résistance mécanique, il est connu de fabriquer des pièces structurelles constituées de plusieurs éléments emboutis et assemblés entre eux.

Cette technique permet de choisir des aciers très résistants pour les éléments soumis à de fortes contraintes mécaniques, et de de choisir un acier moins résistant, pour les éléments soumis à de plus faibles contraintes mécaniques. Les éléments sont ensuite assemblés de façon à être positionnés dans la pièce structurelle en fonction du niveau de contrainte. Il est également possible de jouer sur l'épaisseur des éléments : pour une même nuance d'acier, il est possible de réduire l'épaisseur de certains éléments, pour réduire le poids de la pièce structurelle tout en conservant de bonnes propriétés mécaniques.

Toutefois, ces pièces structurelles, même constituées de plusieurs pièces, offrent un allègement limité et imposent des procédés de fabrication complexes aux constructeurs automobiles.

En effet, l'utilisation d'éléments réalisés dans de nombreuses nuances d'aciers (XES, THLE, TTHLE...), implique un procédé de fabrication différent pour chaque élément : aciers laminés à froid ou à chaud ; emboutissage à froid ou à chaud, trempe partielle (pour augmenter les propriétés mécaniques localement). Cette multitude de procédés impose aux constructeurs automobiles d'avoir de multiples équipements (presses d'emboutissage, systèmes de chauffe, de trempe, robots...) et de gérer un grand nombre de références (pièces et sous-ensembles) qu'il faut ensuite assembler entre eux et sur la caisse automobile (nombreux points de soudures prenant du temps à la fabrication, coûteux et limitant l'allègement des produits).

Une alternative consiste à rapporter (par soudage, raboutage) plusieurs tôles d'acier d'épaisseurs différentes de façon à créer une pièce avec des zones de différentes épaisseurs. Mais ce procédé de fabrication est complexe et entraîne un surcoût de la pièce structurelle.

On connaît également, l'utilisation de pièces de fonderie en aluminium pour réaliser des pièces structurelles. Ces pièces de fonderie permettent de créer des structures ayant des épaisseurs adaptées localement. Mais ce procédé de fabrication rend encore plus complexe la fabrication d'une caisse automobile par un constructeur, puisqu'il nécessite la gestion d'un procédé supplémentaire et entraîne des difficultés d'assemblage sur une caisse automobile classique.

On connaît également des pièces structurelles réalisées en matériau composite.

Le document WO2006/008529 A1 décrit par exemple un empilage de couches de matière plastique renforcée pour mouler un élément de toit de véhicule automobile. De même, le document US2006/0121805 A1 décrit un élément de structure obtenu par imprégnation d'un empilage de couches fibreuses par une résine polymérique. L'utilisation de matériau composite apporte un allègement par rapport aux pièces réalisées en acier.

L'invention a pour but de remédier aux inconvénients des pièces structurelles en acier, et d'améliorer l'allègement procuré par les pièces structurelles réalisées en matériau composite. L'invention y parvient en fournissant un composite multicouche de construction volontairement anisotrope. L'empilage selon l'invention comporte ainsi des couches de matériaux avec des propriétés différentes dans certaines directions privilégiées, de façon à alléger les pièces de structure réalisées par moulage de cet empilement, tout en simplifiant le processus de fabrication. L'allègement, par rapport à des pièces classiques en matériau composite issues d'un empilement conçu pour être globalement quasi isotrope, est obtenu par une réduction de l'épaisseur des couches, et/ou de la quantité de renfort, et/ou du nombre de couches nécessaires pour obtenir une certaine résistance mécanique. En effet, en orientant spécifiquement les éléments de renforts en fonction des directions des sollicitations attendues, la résistance mécanique de la pièce structurelle est maintenue voire accrue dans ces directions spécifiques, tout en allégeant la pièce structurelle, notamment dans les zones ou directions moins sollicitées.

L'objet de l'invention concerne ainsi un empilage pour moulage de pièce en matière plastique, comportant un ensemble de couches, chaque couche comportant une matière plastique et au moins un élément de renfort possédant au moins une direction principale d'élancement, et dans lequel les éléments de renfort d'une couche ont au moins une direction principale d'élancement différente des éléments de renfort d'au moins une autre couche, ladite direction principale d'élancement différente étant choisie de façon à définir une direction d'anisotropie volontaire à l'échelle de l'empilage, et dans lequel au moins une couche non périphérique comporte des éléments de renfort en fibre de carbone et au moins une couche périphérique comporte des éléments de renfort en fibre de verre. Selon l'invention, l'empilage peut comporter plusieurs directions d'anisotropie volontaires formant entre elles un angle supérieur à 25°. Selon l'invention, au moins une couche peut comporter une proportion d'éléments de renfort supérieure à 50% en masse de la couche.

L'empilage peut comporter au moins un empilage élémentaire symétrique dans l'épaisseur de l'empilage.

Dans ce cas, l'empilage peut comporter un seul empilage élémentaire symétrique dans lequel des couches périphériques comportent des éléments de renfort en fibre de verre, et une couche centrale comporte des éléments de renfort en fibre de carbone.

Selon un mode de réalisation, l'empilage comporte en partant d'une couche périphérique jusqu'à la couche centrale :
- une première couche comportant des éléments de renfort en tissus de fibre de verre, dont les directions principales des fibres sont orientées à 0° et à 90°, la direction 0° correspondant à une direction de référence choisie ;
- une seconde couche comportant des éléments de renfort en unidirectionnels de fibre de carbone, dont la direction principale des fibres est orientée à 0° ;
- une troisième couche comportant des éléments de renfort en unidirectionnels de fibre de carbone, dont la direction principale des fibres est orientée à 0° ou à 90°, par rapport à ladite direction de référence.

Selon un autre mode de réalisation, l'empilage comporte en plus une couche intercalée entre la première couche et la seconde couche, ladite couche intercalée comportant des éléments de renfort en tissu de fibre de verre, dont les directions principales des fibres sont orientées à 0° et 90°, ou +45° et -45° par rapport à ladite direction de référence.

Selon ces modes de réalisation, l'empilage peut comporter au moins deux empilages élémentaires symétriques.

L'empilage peut également comporter un troisième empilage élémentaire compris entre les deux empilages élémentaires symétriques, ce troisième empilage élémentaire comportant au moins quatre couches comportant des éléments de renfort en tissus de réalisée par un procédé de moulage à partir d'un empilage selon l'invention.

La pièce de structure peut comporter des nervures réalisées à partir d'éléments de renforts coupés pour apporter de l'inertie et pour stabiliser lesdites couches (2).

Selon l'invention, le procédé de moulage peut être choisi parmi les procédés suivants :
- Moulage par compression ;
- Moulage par compression puis sur-injection ;
- Moulage par compression avec sur injection ;
- Moulage par injection ;
- Moulage procédé RTM ;
- Moulage par pultrusion.

Enfin, selon l'invention, la pièce de structure peut être :
- un pieds avant, arrière ou milieu de véhicule ;
- une poutre de choc avant, arrière ou latérale ;
- un arceau de pavillon ;
- une traverse de pavillon ou de baie ;
- un renfort de porte ;
- un plancher ;
- un tablier.

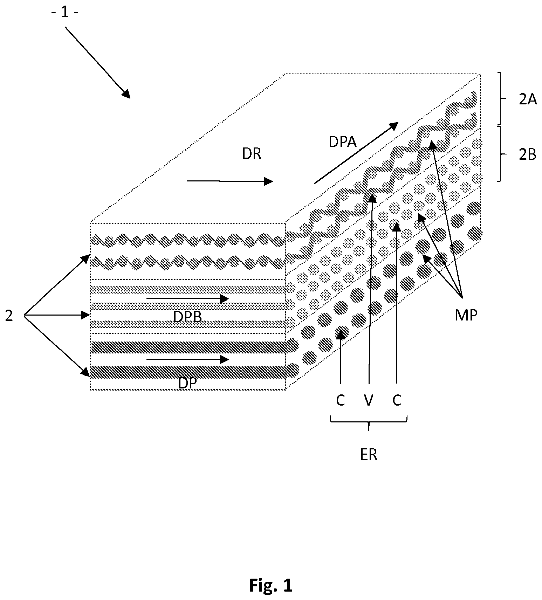

L'invention sera mieux comprise à la lecture de la figure 1 annexée, fournie à titre d'exemple et ne présentent aucun caractère limitatif, et illustrant un exemple d'empilage selon l'invention.

On se réfère maintenant à la figure 1. L'empilage (1) selon l'invention constitue un composite multicouches. Cet empilage (1), pour moulage de pièce en matière plastique, comporte un ensemble de couches, chaque couche (2) comportant une matière plastique (MP) et au moins un élément de renfort (ER).

L'élément de renfort (ER), au sein d'une couche (2), possède une direction principale d'élancement (DP).

Les éléments de renfort (ER) d'une couche ont au moins une direction principale d'élancement différente des éléments de renfort d'au moins une autre couche. Cette direction principale d'élancement différente n'est pas aléatoire, mais elle est choisie de façon à ce qu'à l'échelle de l'empilage, l'empilage présente au moins une direction d'anisotropie volontaire.

Cette direction principale d'élancement différente est notamment choisie en fonction des directions de sollicitations attendues sur une pièce issue du moulage de l'empilage (1).

L'empilage (1) présente une anisotropie à l'échelle de l'empilage, lorsque, vu de dessus et par transparence, il existe au moins une direction dans laquelle la quantité d'éléments de renfort est supérieure à la quantité d'éléments de renfort dans les autres directions.

En effet, un ensemble de couches ayant des éléments de renfort de même nature et de directions différentes, mais conduisant à balayer toutes les directions possibles, conduirait à un empilage quasi isotrope, dans la mesure où, quel que soit la direction, la quantité d'éléments de renfort serait sensiblement la même. Ce serait le cas par exemple d'un empilage de 180 couches, dont la direction principale d'élancement (DP) varierait de 1° à 180° par rapport à une direction de différence.

Selon l'invention, cette anisotropie est volontaire, c'est-à-dire que l'orientation des éléments de renforts est choisie pour qu'à l'échelle de l'empilage (1), l'empilage présente au moins une direction d'anisotropie privilégiée, choisie volontairement.

De préférence, l'empilage comporte plusieurs directions d'anisotropie volontaires. L'angle formé entre deux directions d'anisotropie volontaires étant de préférence supérieur à 25°.

Les éléments de renfort (ER) peuvent être de même nature (c'est-à-dire de même type : carbone ou fibre de verre ou acier...) dans une couche et d'une couche à une autre, mais de façon avantageuse, ils peuvent être de nature différente, tel qu'illustré dans les exemples décrits ci-après.

Selon l'exemple de la figure 1, l'empilage (1) est constitué de façon à être anisotrope (orthotrope selon cet exemple). L'orthotropie est construite de façon à optimiser la résistance mécanique de la pièce qui sera moulée à partir de l'empilage (1), tout en favorisant l'allègement de cette pièce. L'orthotropie est le fait d'avoir des propriétés différentes dans des directions différentes, généralement orthogonales, relativement à une direction principale.

Ainsi, au moins deux couches (2A, 2B) de l'empilage (1) selon l'invention comportent des éléments de renfort (ER) de natures différentes, et ces éléments de renfort (ER) ont des directions principales d'élancement (DP) différentes. Le comportement de l'empilage (1), et notamment ses propriétés mécaniques, sera donc différent selon que l'on se place dans la direction principale d'élancement (DPA) des éléments de renfort (ER) de la première couche (2A), ou dans la direction principale d'élancement (DPB) des éléments de renfort (ER) de la seconde couche (2B).

Généralement, les empilages de couches de matière plastique utilisés pour concevoir des pièces de structure sont conçus de façon à limiter l'anisotropie, et donc à favoriser l'isotropie. Ceci permet de s'approcher, à l'échelle de l'empilage complet et/ou de la pièce, du comportement homogène de l'acier et l'aluminium, qui ont des propriétés équivalentes dans toutes les directions.

Cette recherche d'empilage isotrope est sécurisante d'un point de vue de la conception des pièces de structure. Cependant, en procédant ainsi, on n'exploite pas le fait que chaque pièce de structure automobile subit des efforts plus importants dans certaines directions que dans d'autres.

Favoriser des directions particulières pour les éléments de renfort, permet de limiter la quantité de renfort et l'épaisseur totale de l'empilage, et permet ainsi de limiter le poids de la pièce de structure moulée à partir de l'empilage selon l'invention.

Une couche (2) de l'empilage comporte une matière plastique (MP) et au moins un élément de renfort (ER). La proportion d'éléments de renfort (ER) peut être différente dans chaque couche (2), et elle peut être supérieure à 50% en masse de la couche (2), et de préférence comprise entre 50% et 85% en masse de la couche (2).

La matière plastique (MP) peut être une matière thermodurcissable ou une matière thermoplastique. Cette matière plastique (MP), appelée aussi matrice, peut être choisie seule ou en combinaison parmi les matières suivantes : PA66, PA6, PC-PBT, PBT, PET, PMMA, vinylester, polyester, et epoxy.

De façon préférentielle, les éléments de renfort (ER) possédant une direction principale d'élancement (DP), sont des fibres de carbone (C) et/ou des fibres de verre (V) et/ou des fibres de métal et/ou des fibres végétales et/ou des fibres organiques et/ou des fibres minérales.

Selon l'invention l'empilage (1) comporte ainsi au moins une couche avec des fibres de verre (V), et au moins une couche avec des fibres de carbone (C).

De préférence, au moins une couche non périphérique comporte des éléments de renfort en fibre de carbone (C), et/ou au moins une couche périphérique comporte des éléments de renfort en fibre de verre (V).

Les fibres de verre (V) et les fibres de carbone (C) peuvent être sous différentes formes, telles qu'un unidirectionnel (UD), qu'un bi-axial ou NCF, ou un tissu équilibré, ou un tissu non équilibré. De préférence, on utilise un tissu équilibré de fibres de verre et des fibres de carbone unidirectionnelles.

Les couches peuvent également contenir des renforts en acier, en aluminium ou en magnésium.

On appelle tissu un élément de renfort constitué d'au moins deux groupes de fibres, assemblés par tissage, c'est-à-dire par entrelacement, les fibres d'un même groupe étant sensiblement parallèles entre elles, et les fibres de deux groupes différents, ayant un écart angulaire de leur direction principale d'au moins 25°, étant de préférence sensiblement perpendiculaires. Un tissu est dit équilibré lorsque la quantité de fibre est sensiblement la même dans chacun des deux groupes.

On appelle NCF (de l'anglais « *Non Crimp Fabric* ») un élément de renfort constitué d'au moins deux groupes de fibres, les fibres d'un même groupe étant sensiblement parallèles entre elles, et les fibres de deux groupes différents étant juxtaposées sans tissage c'est-à-dire sans entrelacement. Il existe des NCF cousus, c'est-à-dire avec un fil parcourant l'épaisseur du renfort de façon à lier les groupes de fibres.

On appelle bi-axial un NCF constitué de groupes de fibres disposés dans deux directions principales.

On appelle unidirectionnel un élément de renfort constitué d'un unique groupe de fibres, les fibres étant sensiblement parallèles entre elles.

Selon un premier mode de réalisation, l'empilage (1) comporte au moins un empilage élémentaire symétrique (EES) dans l'épaisseur de l'empilage (1). On appelle empilage symétrique un empilage comportant les mêmes couches, en nature et en direction, de part et d'autre d'un plan coupant l'empilage au milieu de son épaisseur, les couches étant agencées dans le même ordre en partant du plan milieu vers la périphérie. Ainsi, le plan milieu constitue un plan de symétrie vis-à-vis de la nature et de la direction des éléments de renforts.

Cet empilage élémentaire symétrique (EES) comporte, en partant d'une couche périphérique jusqu'à la couche centrale :
- une première couche comportant des éléments de renfort (ER) en tissus de fibre de verre, dont les directions principales d'élancement des fibres sont orientées à 0° et à 90°, la direction 0° correspondant à une direction de référence (DR), et la direction 90° correspondant à une direction perpendculaire à la direction de référence (DR), de préférence, la direction de référence (DR) est la direction dans laquelle la pièce finale présentera sa plus grande dimension ;
- une seconde couche comportant des éléments de renfort en unidirectionnels de fibre de carbone, dont la direction principale des fibres est orientée à 0° ;
- une troisième couche comportant des éléments de renfort en unidirectionnelles de fibre de carbone, dont la direction principale des fibres est orientée à 0° ou à 90°.

Dans ce mode, l'empilage élémentaire symétrique (EES) complet est donc constitué de cinq couches :

| | **Nature** | **Orientation** |
|---|---|---|
| EES | V | 0° / 90° |
| | C | 0° |
| | C | 0° |
| | C | 0° |
| | V | 0° / 90° |

ou

| | **Nature** | **Orientation** |
|---|---|---|
| EES | V | 0° / 90° |
| | C | 0° |
| | C | 90° |
| | C | 0° |
| | V | 0° / 90° |

Ce type d'empilage (1) est innovant notamment car son coeur, c'est-à-dire la couche centrale, est à base de fibres de carbone, alors que les couches périphériques sont à base de fibres de verre. Généralement, les empilages connus possèdent une organisation inverse, de façon à ce que les fibres de carbones renforcent la structure en périphérie. En effet, il est bien connu en mécanique (phénomène d'inertie) que dans un comportement en flexion ou en flambage, les meilleurs résultats seront obtenus en plaçant les matériaux les plus performants en périphérie (en extérieur) de la pièce. Cette propriété mécanique est par exemple exploitée dans les structures dites « en sandwich », constituées d'une âme en mousse intercalée entre deux peaux rigides.

Cependant, les pièces structurelles de véhicule automobile sont amenées à être fixées sur la caisse du véhicule, généralement en acier ou aluminium. Des problèmes de corrosion peuvent alors apparaitre à l'interface entre les fibres de carbones et l'acier ou l'aluminium, par effet de pile (« couple électrochimique »). En disposant les fibres de carbones au coeur de l'empilage élémentaire, on conserve la résistance de la pièce finale, tout en évitant ces problèmes de corrosion.

La séquence d'empilage peut se répéter en fonction des épaisseurs des couches de matière. A titre d'exemple, on peut utiliser des couches de fibres de verre ayant une épaisseur de 0,5mm, et des couches de fibres de carbone ayant une épaisseur de 0,15mm. Mais ces épaisseurs peuvent varier en fonction de la nature exacte du matériau utilisé par couche (matrice (MP), renfort (ER), masse surfacique, épaisseur de la pièce finale à atteindre...).

Selon un second mode de réalisation, l'empilage (1) comporte en plus une couche intercalée entre la première couche et la seconde couche. Cette couche intercalée comporte des éléments de renfort en tissu de fibre de verre, dont les directions principales des fibres sont orientées à 0° et 90°,ou à +45° et -45° par rapport à la direction de référence (DR).

L'empilage élémentaire symétrique (EES) complet est donc constitué de sept couches :

| | **Nature** | **Orientation** |
|---|---|---|
| EES | V | 0° / 90° |
| | V | 0° / 90° |
| | C | 0° |
| | C | 0° ou 90° |
| | C | 0° |
| | V | 0° / 90° |
| | V | 0° / 90° |

ou

| | **Nature** | **Orientation** |
|---|---|---|
| EES | V | 0° / 90° |
| | V | +45° / -45° |
| | C | 0° |
| | C | 0° ou 90° |
| | C | 0° |
| | V | +45° / -45° |
| | V | 0° / 90° |

L'empilage (1) selon l'invention, peut comporter plusieurs empilements élémentaires (EES1, EES2). Par exemple, l'empilage peut comporter les couches suivantes :

| | **Nature** | **Orientation** |
|---|---|---|
| EES1 | V | 0° / 90° |
| | V | 0° / 90° |
| | C | 0° |
| | C | 0° |
| | C | 0° |
| | V | 0° / 90° |
| | V | 0° / 90° |
| EES2 | V | 0° / 90° |
| | V | 0° / 90° |
| | C | 0° |
| | C | 0° |
| | C | 0° |
| | V | 0° / 90° |
| | V | 0° / 90° |

Un tel empilage (1) permet d'atteindre les propriétés suivantes sur une pièce finie :
- En exerçant une traction selon la direction 0° :
   ∘ module de rigidité (Module d'Young) entre 50 et 65 GPa ;
   ∘ contrainte maximale entre 550 et 1100MPa.
- En exerçant une traction selon la direction 90° :
   ∘ module de rigidité (Module d'Young) entre 7 et 14 GPa ;
   ∘ contrainte maximale entre 50 et 250MPa.

On rappelle que la proportion d'éléments de renfort peut être différente dans chaque couche, et elle peut être comprise entre 50% et 85% en masse de la couche.

Ces propriétés s'entendent à 40%-60% d'humidité relative dans l'air pour les thermoplastiques reprenant l'humidité, en particulier les polyamides.

Selon un troisième mode de réalisation, l'empilage (1) comporte un troisième empilage élémentaire (EE) compris entre les deux empilages élémentaires symétriques (EES1, EES2), ce troisième empilage élémentaire (EE) comportant au moins quatre couches comportant des éléments de renfort en tissus de fibre de verre, dont les directions principales des fibres sont orientées à 0° et 90° par rapport à la direction de référence (DR).

Par exemple, l'empilage (1) peut comporter les couches suivantes :

| | **Nature** | **Orientation** |
|---|---|---|
| EES1 | V | 0° / 90° |
| | C | 0° |
| | C | 0° |
| | C | 0° |
| | V | 0° / 90° |
| EE | V | 0° / 90° |
| | V | 0° / 90° |
| | V | 0° / 90° |
| | V | 0° / 90° |
| EES2 | V | 0° / 90° |
| | C | 0° |
| | C | 0° |
| | C | 0° |
| | V | 0° / 90° |

Un tel empilage permet d'atteindre les propriétés suivantes sur une pièce finie :
- En exerçant une traction selon la direction 0° :
   ∘ module de rigidité (Module d'Young) entre 50 et 65 GPa ;
   ∘ contrainte maximale entre 550 et 1100MPa.
- En exerçant une traction selon la direction 90° :
   ∘ module de rigidité (Module d'Young) entre 7 et 14 GPa ;
   ∘ contrainte maximale entre 50 et 250MPa.

On rappelle que la proportion d'éléments de renfort peut être différente dans chaque couche, et elle peut être comprise entre 50% et 85% en masse de la couche.

L'invention concerne également une pièce de structure pour véhicule automobile, réalisée par un procédé de moulage à partir d'un empilage selon l'invention.

Cette pièce de structure pour véhicule automobile peut être :
- un pieds avant, arrière et milieu du véhicule ;
- une poutre de choc avant, arrière et latérale (longeron) ;
- un arceau (arche) de pavillon ;
- une traverse de pavillon ou de baie ;
- un renfort de porte ;
- un plancher ;
- un tablier ;
- une doublure (cadre) d'ouvrant.

Selon un mode de réalisation, la pièce comporte des nervures réalisées à partir d'éléments de renforts coupés, pour pouvoir apporter de l'inertie, et stabiliser lesdites couches de l'empilement.

Selon l'invention, le procédé de moulage peut être choisi parmi les procédés suivants :
- moulage par compression ;
- moulage par compression dans un 1^{er} outillage puis (sur-)injection dans un 2^{ème} moule
- moulage par compression et injection en un seul moule ;
- moulage par injection ;
- moulage par procédé RTM (« Resin Transfer Molding » en anglais) ;
- moulage par pultrusion.

On note que les directions des fibres de renfort au sein de la pièce de structure peuvent varier de +/- 25° par rapport aux directions au sein de l'empilage.

L'invention concerne également un procédé de fabrication d'une pièce de structure pour véhicule automobile, dans lequel on positionne un empilement selon l'invention dans un moule, puis on forme la pièce par un procédé de moulage au moyen du moule.

Le procédé de moulage peut être choisi parmi les procédés suivants :
- moulage par compression ;
- moulage par compression dans un 1^{er} outillage puis (sur-)injection dans un 2^{ème} moule
- moulage par compression et injection en un seul moule ;
- moulage par injection ;
- moulage par procédé RTM (« Resin Transfer Molding » en anglais) ;
- moulage par pultrusion.

## Revendications

1. Empilage (1) pour moulage de pièce en matière plastique, comportant un ensemble de couches, chaque couche (2) comportant une matière plastique (MP) et au moins un élément de renfort (ER) possédant au moins une direction principale d'élancement (DP), **caractérisé en ce que** les éléments de renfort (ER) d'une couche ont au moins une direction principale d'élancement différente des éléments de renfort d'au moins une autre couche, ladite direction principale d'élancement différente étant choisie de façon à définir une direction d'anisotropie volontaire à l'échelle de l'empilage (1), et **en ce qu'**au moins une couche non périphérique comporte des éléments de renfort en fibre de carbone (C), et au moins une couche périphérique comporte des éléments de renfort en fibre de verre (V).

2. Empilage (1) selon la revendication 1, dans lequel l'empilage (1) comporte plusieurs directions d'anisotropie volontaires formant entre elles un angle supérieur à 25°.

3. Empilage (1) selon l'une des revendications précédentes, dans lequel au moins une couche (2) comporte une proportion d'éléments de renfort (ER) supérieure à 50% en masse de la couche (2).

4. Empilage (1) selon l'une des revendications précédentes, dans lequel l'empilage comporte au moins un empilage élémentaire symétrique (EES) dans l'épaisseur de l'empilage (1).

5. Empilage (1) selon la revendication 4, dans lequel l'empilage comporte un seul empilage élémentaire symétrique (EES) dans lequel des couches périphériques comportent des éléments de renfort en fibre de verre (V), et une couche centrale comporte des éléments de renfort en fibre de carbone (C).

6. Empilage (1) selon l'une des revendications 4 et 5, comportant en partant d'une couche périphérique jusqu'à la couche centrale :
- une première couche comportant des éléments de renfort en tissus de fibre de verre, dont les directions principales des fibres sont orientées à 0° et à 90°, la direction 0° correspondant à une direction de référence (DR) choisie ;
- une seconde couche comportant des éléments de renfort en unidirectionnels de fibre de carbone, dont la direction principale des fibres est orientée à 0° ;
- une troisième couche comportant des éléments de renfort en unidirectionnels de fibre de carbone, dont la direction principale des fibres est orientée à 0° ou à 90°, par rapport à ladite direction de référence (DR).

7. Empilage (1) selon la revendication 6, comportant en plus une couche intercalée entre la première couche et la seconde couche, ladite couche intercalée comportant des éléments de renfort en tissu de fibre de verre, dont les directions principales des fibres sont orientées à 0° et 90°, ou +45° et -45° par rapport à ladite direction de référence (DR).

8. Empilage selon l'une des revendications 4 à 7, comportant au moins deux empilages élémentaires symétriques (EES1, EES2).

9. Empilage selon la revendication 8, comportant un troisième empilage élémentaire (EE) compris entre les deux empilages élémentaires symétriques (EES1, EES2), ce troisième empilage élémentaire (EE) comportant au moins quatre couches comportant des éléments de renfort en tissus de fibre de verre, dont les directions principales des fibres sont orientées à 0° et 90° par rapport à ladite direction de référence (DR).

10. Pièce de structure pour véhicule automobile, réalisée par un procédé de moulage à partir d'un empilage (1) selon l'une des revendications précédentes.

11. Pièce de structure selon la revendication 10, comportant des nervures réalisées à partir d'éléments de renforts coupés pour apporter de l'inertie et pour stabiliser lesdites couches (2).

12. Pièce de structure selon l'une des revendications 10 et 11, dans laquelle le procédé de moulage est choisi parmi les procédés suivants :
- moulage par compression ;
- moulage par compression puis sur-injection ;
- moulage par compression avec sur injection ;
- moulage par injection ;
- moulage procédé RTM ;
- moulage par pultrusion.

13. Pièce de structure selon l'une des revendications 10 à 12, formant une des pièces de structure suivante :
- un pieds avant, arrière ou milieu de véhicule ;
- une poutre de choc avant, arrière ou latérale ;
- un arceau de pavillon ;
- une traverse de pavillon ou de baie ;
- un renfort de porte ;
- un plancher ;
- un tablier.

## Patentansprüche

1. Lagenweise Anordnung (1) zum Formen eines Teils aus Kunststoff, aufweisend eine Anordnung aus Schichten, wobei jede Schicht (2) einen Kunststoff (MP) und mindestens ein Verstärkungselement (ER) aufweist, das mindestens eine Hauptlängenrichtung (DP) besitzt, **dadurch gekennzeichnet**, die Verstärkungselemente (ER) einer Schicht mindestens eine Hauptlängenrichtung haben, die von den Verstärkungselementen mindestens einer anderen Schicht unterschiedlich ist, wobei die unterschiedliche Hauptlängenrichtung so gewählt ist, dass sie eine willentliche Anisotropierichtung auf Ebene der lagenweisen Anordnung (1) definiert, und dass mindestens eine nicht umfängliche Schicht Verstärkungselemente aus Kohlefasern (C) aufweist und mindestens eine umfängliche Schicht Verstärkungselemente aus Glasfasern (V) aufweist.

2. Lagenweise Anordnung (1) nach Anspruch 1, wobei die lagenweise Anordnung (1) mehrere willentliche Anisotropierichtungen aufweist, die zueinander einen Winkel größer als 25° bilden.

3. Lagenweise Anordnung (1) nach einem der vorhergehenden Ansprüche, wobei mindestens eine Schicht (2) einen Anteil an Verstärkungselementen (ER) größer als 50 Masse-% der Schicht (2) aufweist.

4. Lagenweise Anordnung (1) nach einem der vorhergehenden Ansprüche, wobei die lagenweise Anordnung mindestens eine in der Dicke der lagenweisen Anordnung (1) symmetrische elementare lagenweise Anordnung (EES) aufweist.

5. Lagenweise Anordnung (1) nach Anspruch 4, wobei die lagenweise Anordnung eine einzige symmetrische elementare lagenweise Anordnung (EES) aufweist, wobei umfängliche Schichten Verstärkungselemente aus Glasfasern (V) aufweisen, und eine mittlere Schicht Verstärkungselemente aus Kohlefasern (C) aufweist.

6. Lagenweise Anordnung (1) nach einem der Ansprüche 4 und 5, aufweisend, von einer umfänglichen Schicht bis zu der mittleren Schicht,
- eine erste Schicht, die Verstärkungselemente aus Glasfasergewebe aufweist, wobei die Hauptrichtungen der Fasern um 0° und um 90° orientiert sind, wobei die Richtung 0° einer gewählten Referenzrichtung (DR) entspricht;
- eine zweite Schicht, die Verstärkungselemente aus unidirektionalen Kohlefasern aufweist, wobei die Hauptrichtung der Fasern um 0° orientiert ist;
- eine dritte Schicht, die Verstärkungselemente aus unidirektionalen Kohlefasern aufweist, wobei die Hauptrichtung der Fasern um 0° oder um 90° orientiert ist, relativ zu der Referenzrichtung (DR).

7. Lagenweise Anordnung (1) nach Anspruch 6, aufweisend des Weiteren eine Zwischenschicht, die zwischen der ersten Schicht und der zweiten Schicht angeordnet ist, die Zwischenschicht Verstärkungselemente aus Glasfasergewebe aufweist, wobei die Hauptrichtungen der Fasern um 0° und um 90° oder um +45° und -45° orientiert sind, relativ zu der Referenzrichtung (DR).

8. Lagenweise Anordnung nach einem der Ansprüche 4 bis 7, aufweisend mindestens zwei symmetrische elementare lagenweise Anordnungen (EES1, EES2).

9. Lagenweise Anordnung (1) nach Anspruch 8, aufweisend eine dritte elementare lagenweise Anordnung (EE) zwischen den zwei symmetrischen elementaren lagenweisen Anordnungen (EES1, EES2), wobei diese dritte elementare lagenweise Anordnung (EE) mindestens vier Schichten aufweist, die Verstärkungselemente aus Glasfasergewebe aufweisen, wobei die Hauptrichtungen der Fasern um 0° und um 90° orientiert sind, relativ zu der Referenzrichtung (DR).

10. Strukturteil für Kraftfahrzeug, realisiert durch ein Formverfahren ausgehend von einer lagenweisen Anordnung (1) nach einem der vorhergehenden Ansprüche.

11. Strukturteil nach Anspruch 10, aufweisend Rippen, die ausgehend von Verstärkungselementen realisiert sind, die geschnitten sind, um Trägheit zuführen und um die Schichten (2) zu stabilisieren.

12. Strukturteil nach einem der Ansprüche 10 und 11, wobei das Formverfahren ausgewählt ist aus den folgenden Verfahren:
- Druckgießen;
- Druckgießen und anschließend Umspritzen;
- Druckgießen mit Umspritzen;
- Spritzgießen;
- RTM-Formen;
- Strangziehen.

13. Strukturteil nach einem der Ansprüche 10 bis 12, das eines der folgenden Strukturteile bildet:
- eine A-Säule, C-Säule oder B-Säule eines Kraftfahrzeugs;
- einen vorderen, hinteren oder seitlichen Aufprallträger;
- einen Dachholm;
- einen Dach- oder Fensterquerträger;
- eine Türverstärkung;
- einen Boden;
- eine Stirnwand.

## Claims

1. Stack (1) for moulding plastic parts, comprising a set of layers, each layer (2) having a plastic material (MP) and at least one reinforcement element (ER) having at least one main slenderness direction (DP), **characterised in that** the reinforcement elements (ER) of a layer have at least one main slenderness direction different from the reinforcement elements of at least one other layer, said different main slenderness direction being selected so as to define a deliberate anisotropy direction at the scale of the stack (1), and **in that** the at least one non-peripheral layer comprises reinforcement elements made of carbon fibre (C), and at least one peripheral layer comprises reinforcement elements made of glass fibre (V).

2. Stack (1) according to claim 1, wherein the stack (1) comprises several deliberate anisotropy directions forming between them an angle greater than 25°.

3. Stack (1) according to one of the preceding claims, wherein at least one layer (2) comprises a proportion of reinforcement elements (ER) greater than 50 % by weight of the layer (2).

4. Stack (1) according to one of the preceding claims, wherein the stack comprises at least one symmetrical elementary stack (EES) in the thickness of the stack (1).

5. Stack (1) according to claim 4, wherein the stack comprises a single symmetrical elementary stack (EES) in which peripheral layers comprise reinforcement elements made of glass fibre (V), and a central layer comprises reinforcement elements made of carbon fibre (C).

6. Stack (1) according to claim 4 or 5 comprising, starting from a peripheral layer up to the central layer:
- a first layer comprising reinforcement elements made of glass fibre fabrics, the main directions of the fibres being oriented at 0° and 90°, the 0° direction corresponding to a selected reference direction (DR);
- a second layer comprising reinforcement elements made of unidirectional carbon fibre, the main direction of the fibres being oriented at 0°;
- a third layer comprising reinforcement elements made of unidirectional carbon fibre, the main direction of the fibres being oriented at 0° or 90° relative to said reference direction (DR).

7. Stack (1) according to claim 6, further comprising a layer inserted between the first layer and the second layer, said inserted layer comprising reinforcement elements made of glass fibre fabric, the main directions of the fibres being oriented at 0° and 90°, or +45° and -45° relative to said reference direction (DR).

8. Stack according to one of claims 4 to 7, comprising at least two symmetrical elementary stacks (EES1, EES2).

9. Stack according to claim 8, comprising a third elementary stack (EE) between the two symmetrical elementary stacks (EES1, EES2), this third elementary stack (EE) comprising at least four layers comprising reinforcement elements made of glass fibre fabrics, the main directions of the fibres being oriented at 0° and 90° relative to said reference direction (DR).

10. Structural part for motor vehicle, manufactured by a moulding method from a stack (1) according to one of the preceding claims.

11. Structural part according to claim 10, comprising ribs made from cut reinforcement elements to add inertia and to stabilise said layers (2).

12. Structural part according to claim 10 or 11, wherein the moulding method is selected from the following methods:
- compression moulding;
- compression moulding then over-injection;
- compression moulding with over-injection;
- injection moulding;
- RTM (resin transfer moulding);
- pultrusion moulding.

13. Structural part according to one of claims 10 to 12, forming one of the following structural parts:
- an A-, C- or B- pillar of the vehicle;
- a front, rear or side bumper beam;
- a roof bow;
- a roof or window cross-member;
- a door reinforcement;
- a floor;
- a dash panel.
